Europäisches Patentamt

European Patent Office

Office européen des brevets

(11) Veröffentlichungsnummer : **0 007 578**
**B1**

(12) # EUROPÄISCHE PATENTSCHRIFT

(45) Veröffentlichungstag der Patentschrift :
24.11.82

(21) Anmeldenummer : 79102539.8

(22) Anmeldetag : 18.07.79

(51) Int. Cl.³ : **H 04 L 25/08, H 04 L 25/12,
H 04 L 25/22**

(54) Schaltungsanordnung zur Aussendung von Telegrafiezeichen.

(30) Priorität : 01.08.78 DE 2833732

(43) Veröffentlichungstag der Anmeldung :
06.02.80 (Patentblatt 80/03)

(45) Bekanntmachung des Hinweises auf die Patenterteilung : 24.11.82 Patentblatt 82/47

(84) Benannte Vertragsstaaten :
DE FR GB NL SE

(56) Entgegenhaltungen :
DE A 2 138 576
DE A 2 310 940
DE B 2 035 379
DE B 2 247 768
DE B 2 358 003

(73) Patentinhaber : **SIEMENS AKTIENGESELLSCHAFT**
**Berlin und München**
**Postfach 22 02 61**
**D-8000 München 22 (DE)**

(72) Erfinder : **Hötzel, Oskar**
**Zugspitzstrasse 3**
**D-8021 Neuried (DE)**
Erfinder : **Skobranek, Norbert**
**Auf der Vogelwiese 7**
**D-8000 München 70 (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Schaltungsanordnung zur Aussendung von Telegrafiezeichen

Die Erfindung betrifft eine Schaltungsanordnung zum Aussenden von Gleichstromtelegrafiezeichen über eine Leitung, in der die Sendeschaltung eine vom Eingang galvanisch getrennte Symmetrierschaltung, eine Schaltung zur Abflachung der Telegrafiezeichen und eine Schaltung zur automatischen Einstellung des Leitungsstromes mit einem Operationsverstärker enthält, dem an seinem einen Eingang ein in der Symmetrierschaltung einstellbarer Sollwert und an seinem anderen Eingang ein durch den Leitungsstrom und Meßwiderstände bestimmter Istwert zugeführt wird und bei der der Operationsverstärker und die Schaltmittel der Abflachschaltung ein aktives Filter bilden.

Eine solche Schaltung zur Aussendung von Gleichstromtelegrafiezeichen ist aus der DE-AS 22 47 768 bekannt. Diese Schaltung ermöglicht eine automatische Einstellung des Linienstromes in der Teilnehmerschleife sowie eine Abflachung der Flanken der gesendeten Zeichen und ist sowohl für kurze als auch für längere Leitungen einsetzbar, ohne daß voluminöse Induktivitäten erforderlich sind. Allerdings bietet diese bekannte Sendeschaltung keinen ausreichenden Schutz beim Auftreten von Gegenspannungen auf der Leitung.

Aufgabe der Erfindung ist es, eine Sendeschaltung anzugeben, die einen solchen Schutz gewährleistet.

Insbesondere soll damit das Auftreten von Verlustleistungen im Falle einer Gegenspannung vermieden werden.

Diese Aufgabe wird gemäß dem Kennzeichen des Anspruches 1 gelöst.

Der erfindungsgemäße Aufbau verbindet die Vorteile der bekannten Sendeschaltung mit dem Vorteil einer sehr guten Gegenspannungsfestigkeit.

Einzelheiten der Erfindung werden im folgenden anhand der Zeichnungen erläutert.

Dabei zeigt

Figur 1 ein detailliertes Ausführungsbeispiel und

Figur 2 das Ausführungsbeispiel nach Fig. 1 mit der Möglichkeit, die Abflachcharakteristik in einfacher Weise zu verändern.

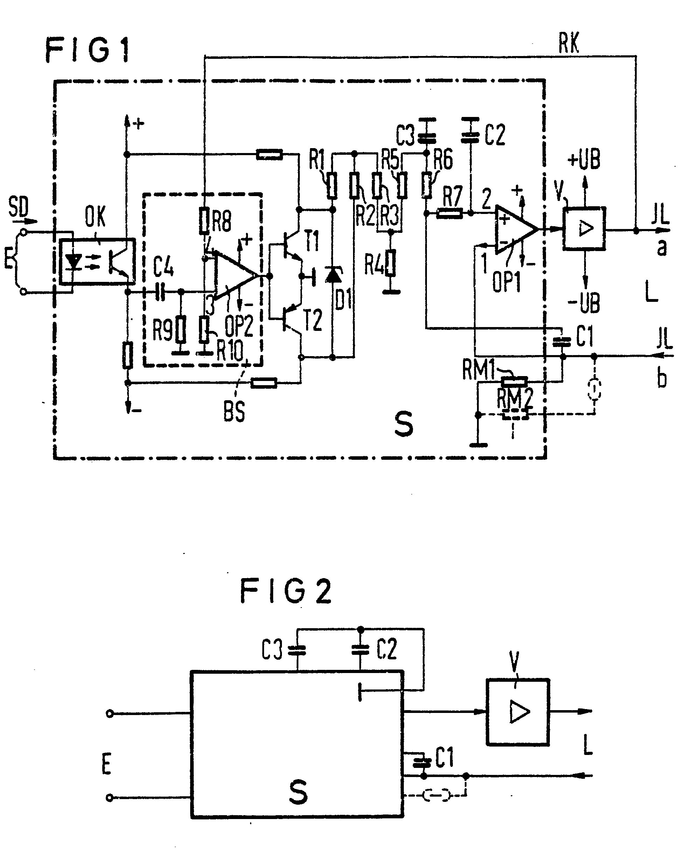

Im Ausführungsbeispiel nach Fig. 1 für eine Telegrafiesendeschaltung S werden die über den Eingang E als Einfachstromzeichen ankommenden Sendedaten SD über die auf der rechten Seite weiterführende Leitung L mit den beiden Adern a und b als Doppelstromzeichen ausgesendet. Zur galvanischen Trennung ist ein Optokoppler OK und zur Bildung eines symmetrischen Telegrafiesignals ist eine aus den Transistoren T1 und T2 der Zenerdiode D1 sowie zwei Teilerschaltungen mit den Widerständen R1 und R2 bzw. R3 und R4 bestehende Symmetrierschaltung vorgesehen. Das Telegrafiesignal wird in einer mit den Widerständen R5, R6 und R7 sowie den Kondensatoren C1, C2 und C3 und dem Operationsverstärker OP1 gebildeten Schaltung abgeflacht. Diese Schaltung stellt ein aktives Filter dritter Ordnung dar. Der Ausgang des Operationsverstärkers OP1 ist im Ausführungsbeispiel mit einem weiteren Verstärker V verbunden, der den Leitungsstrom IL für die Leitung L liefert. Zur Messung des Leitungsstromes IL ist der Meßwiderstand RM1 vorgesehen, der zusammen mit dem Operationsverstärker OP1 die automatische Regelung des Leitungsstromes durchführt. Über Brücken können weitere Meßwiderstände, von denen in Fig. 1 lediglich ein zweiter Meßwiderstand RM2 dargestellt ist, eingeschaltet werden. Die Anordnung kann damit auf verschiedene Stromwerte für den Leitungsstrom IL eingestellt werden.

Erfindungsgemäß weist zur Vermeidung einer hohen Verlustleistung bei Gegenspannung die Sendeschaltung S ein bistabiles Verhalten auf. Das wird durch die Schaltung BS und eine Rückkopplung RK vom Ausgang der Sendeschaltung zum Eingang der Symmetrierschaltung erreicht. Die Schaltung BS besteht aus den Widerständen R8, R9 und R10, einem Kondensator C4 sowie einem Operationsverstärker OP2. Der Ausgang des Operationsverstärkers OP2 bildet den Eingang für die Symmetrierschaltung der Sendeschaltung S. Die Schaltung BS wird einerseits über den Transistor des Optokopplers OK entsprechend den Sendedaten SD gesteuert und ist andererseits über den Rückkopplungszweig RK mit dem Ausgang des Verstärkers V verbunden.

Zunächst wird die Wirkungsweise der Anordnung ohne bistabiles Verhalten beschrieben. Bei Eintreffen eines Telegrafiezeichens am Eingang E wird über den Optokoppler OK der Transistor T1 der Symmetrierschaltung leitend und der Transistor T2 gesperrt. Wird der Stromfluß durch die Diode des Optokopplers OK beendet, so wird der Transistor T2 leitend und der Transistor T1 gesperrt. Dabei stellt sich am Kollektor des jeweils leitenden Transistors ein Potential von etwa 0 Volt und am Kollektor des jeweils gesperrten Transistors ein negatives bzw. ein positives Potential ein. Diese Spannungswerte werden symmetriert und durch die Widerstände R1 und R2 sowie durch die Widerstände R3 und R4 des nachfolgenden Spannungsteilers auf einen gewünschten Pegel eingestellt. Dieser Wert stellt den Sollwert für die Regelung des Leitungsstromes IL dar. Der Istwert wird über den Meßwiderstand RM1 beim Fließen des für den Betrieb vorgesehenen Leitungsstromes IL gewonnen. Nimmt man beispielsweise an, daß der Leitungsstrom IL in beiden Richtungen 20 mA betragen soll, und wird ein Meßwiderstand RM1 mit einem Wert von 33 Ohm verwendet, so liegt am Eingang 1 des Operationsverstärkers OK1 eine Spannung von ± 0,66 V. Für diesen Fall sind also die Widerstände der beiden Teilerschaltungen derart zu demsionieren, daß auch am Eingang 2 des Operationsverstärkers OP1 eine Spannung von

± 0,66 V als Sollwert zur Verfügung steht. Die automatische Regelung des auf der Leitung L fließenden Leitungsstromes IL geschieht dabei derart, daß eine Abweichung des Leitungsstromes IL vom vorgegebenen Wert über den Operationsverstärker OP1 zur Abgabe einer Regelgröße führt, die steuernd auf den nachgeschalteten Verstärker V einwirkt. Mittels der über Brükken einschaltbaren verschiedenen Meßwiderstände, ist die Schaltung an einen Betrieb mit verschiedenen Leitungsströmen anpaßbar.

Unter Einbeziehung der Schaltung BS und der Rückkopplung RK ergibt sich ein bistabiles Verhalten der Sendeschaltung S. In diesem Falle werden die über den Optokoppler OK übertragenen Telegrafiezeichen durch die aus dem Widerstand R9 und dem Kondensator C4 bestehende RC-Kombination in der Schaltung BS differenziert, dem Eingang 3 des Operationsverstärkers OP2 zugeführt. Dem Eingang 4 des Operationsverstärkers OP2 steht über dem Widerstand R8 und über die Rückkopplung RK ein vom über die Leitung L ausgesendeten Telegrafiezeichen abgeleitetes Signal zur Verfügung. Damit wird erreicht, daß die Schaltung BS während der gesamten Dauer des am Eingang E anliegenden Telegrafiezeichens den durch den Differenzierimpuls eingestellten Zustand beibehält. Tritt nun auf der Leitung L beispielsweise durch ein fehlerhaftes Anschalten der Gegenpolarität eine extrem hohe, maximal dem doppelten Wert der Betriebsspannung entsprechende Spannung auf, so wird diese über die Rückkopplung RK dem Eingang 4 des Operationsverstärkers OP2 zugeführt. Über den Ausgang des Operationsverstärkers OP2 wird somit die Sendeschaltung in die Lage umgesteuert, in der sie die gleiche Polarität wie die Gegenspannung abgibt. Dadurch wird die hohe Verlustleistung bei Gegenspannung vermieden. Die Steuerung des Operationsverstärkers OP2 einerseits durch Differenzierung der am Eingang E anliegenden Telegrafiezeichen, und andererseits durch ein von der Leitung L rückgekoppeltes Signal stellt sicher, daß beim normalen Telegrafiebetrieb bei jeder durch einen Telegrafierschritt bedingten Polaritätsumschaltung der Leitung L die beschriebene Wirkung der Schaltung BS kurzzeitig verzögert wird. Das ist erforderlich, weil bei einer Polaritätsumschaltung der Leitung L die Leitungskapazitäten umgeladen werden, und dabei kurzzeitig ebenfalls ähnliche Verhältnisse wie beim Anliegen einer Gegenspannung auftreten. Bei dauernd angelegter Gegenspannung wird bedingt durch diese verzögerte Kippeigenschaft zwar bei jeder Umschaltung der Sendeschaltung die volle Gegenspannung angeschaltet und erzeugt eine Verlustleistung, doch bleibt diese jeweils nur auf die durch die verzögernde Wirkung der Kippeigenschaft bedingten Zeiten wirksam.

Fig. 2 zeigt eine Ausgestaltung der Sendeschaltung, bei der die zur Einstellung der Abflachcharakteristik des symmetrischen Telegrafiesignals vorgesehenen Kondensatoren C1, C2 und C3, sowie die Brücken für die Meßwiderstände außerhalb der Sendeschaltung S angeordnet sind. Das ermöglicht eine sehr flexible Anpassung an verschiedene Telegrafiegeschwindigkeiten unter Berücksichtigung der notwendigen bzw. maximal möglichen Abflachung der Telegrafiezeichen und gewährleistet trotzdem die vorher erwähnten Vorteile.

**Anspruch**

Schaltungsanordnung zum Aussenden von Gleichstromtelegrafiezeichen über eine Leitung (L), in der die Sendeschaltung (S) eine vom Eingang (E) galvanisch getrennte Symmetrierschaltung, eine Schaltung zur Abflachung der Telegrafiezeichen und eine Schaltung zur automatischen Einstellung des Leitungsstromes (IL) mit einem Operationsverstärker (OP1) enthält, dem an seinem einen Eingang (2) ein in der Symmetrierschaltung einstellbarer Sollwert (USoll) und an seinem anderen Eingang (1) ein durch den Leitungsstrom (IL) und Messwiderstände (RM1, RM2) bestimmter Istwert (UIst) geführt wird und bei der der Operationsverstärker (OP1) und die Schaltmittel der Abflachschaltung (R5, R6, R7, C1, C2, C3) ein aktives Filter bilden, dadurch gekennzeichnet, daß zwischen dem Schaltmittel zur galvanischen Trennung (OK) und der Symmetrierschaltung eine Differenzierschaltung (C4, R9) für die Sendedaten (SD) und ein zweiter Operationsverstärker (OP2) vorgesehen ist, dessen einer Eingang (3) mit der Differenzierschaltung verbunden ist, und dessen anderer Eingang (4) an den Sendeausgang (a) der Leitung (L) rückgekoppelt ist (Rk, R8).

**Claim**

A circuit arrangement for transmitting direct current telegraphic signals via a line (L), wherein the transmitting circuit (S) contains a balancing circuit, which is galvanically isolated from the input (E), a circuit for levelling the telegraphic signals and a circuit for automatically adjusting the line current (IL) by an operational amplifier (OP1) having applied to one input (2) a theoretical value which is adjustable in the balancing circuit, and an actual value determined by the line current (IL) and measuring resistors (RM1, RM2) applied to its other output (1), and wherein the operational amplifier (OP1) and the circuit elements of the levelling circuits (R5, R6, R7, C1, C2, C3) form an active filter, characterised in that between the circuit means for the galvanic separation (OK) and the balancing circuit there is arranged a differentiating circuit (C4, R9) for the transmitting data (SD) and a second operational amplifier (OP2) whose one input (3) is connected to the differentiating circuit and whose other input (4) is coupled back (Rk, R8) to the transmitting output (a) of the line (4).

## Revendication

Dispositif de transmission de signaux télégraphiques à courant continu par l'intermédiaire d'une ligne (L), dans lequel le circuit émetteur (S) comporte un circuit de symétrisation séparé galvaniquement de l'entrée (E), un circuit pour l'égalisation des signes télégraphiques et un circuit pour régler automatiquement le courant de ligne (IL) avec un amplificateur opérationnel (OP1) auquel on applique à l'une de ses entrées (2) une valeur de consigne réglable dans le circuit de symétrisation et à son autre entrée (1) une valeur instantanée déterminée par le courant de ligne (IL) et par des résistances de mesure (RM1, RM2), et dans lequel l'amplificateur opérationnel (OP1) et les moyens de commutation du circuit d'égalisation (R5, R6, R7, C1, C2, C3) forment un filtre actif, caractérisé par le fait qu'entre le moyen de commutation servant à la séparation galvanique (OK) et le circuit de symétrisation, on prévoit un circuit de différenciation (C4, R9) pour les données émises (SD) et un second amplificateur opérationnel (OP2) dont une entrée (3) est reliée au circuit de différenciation et dont l'autre entrée (4) est couplée rétroactivement à la sortie émission (a) de la ligne (L).

# FIG 1

# FIG 2